# EUROPEAN PATENT APPLICATION

(11) **EP 1 036 638 A1**
(43) Date of publication of application: **20.09.2000**
(21) Application number: 98932541.0
(22) Date of filing: 15.07.1998
(51) Int. Cl.: B28B 7/18

(54) **CONCRETE BLOCK, JOINT FOR THE SAME, AND STRUCTURE OF CONCRETE BLOCKS**

(30) Priority: 17.07.1997 JP 19283697; 02.10.1997 JP 27020297
(71) Applicant: Rita Engineering Consultants Co., Ltd., Ohnojo-shi, Fukuoka 816-0924 (JP)
(72) Inventor: KIMURA, Shiro, Kasuga-shi Fukuoka 816-0814 (JP); KIMURA, Taizo, Kasuga-shi Fukuoka 816-0811 (JP); TANNO, Masashi Fudo Building Research Co., Ltd., Fukuoka-shi Fukuoka 812-0011 (JP)
(74) Representative: von Samson-Himmelstjerna, Friedrich R., Dipl.-Phys.
(86) International application number: JP9803189
(87) International publication number: WO9903659

(57) **Abstract**

A concrete block having comparatively light weight and capable of being manufactured easily and used in various fields of application; a block joint for the concrete blocks, capable of carrying out the arrangement of the concrete blocks simply and retaining the arranged concrete blocks in good order; and a structure made by using the concrete blocks and the block joints. The joint (1,2) has seats (1b,2b) which are formed by cutting off predetermined portions thereof and adapted to restrict positions in which the concrete blocks (3) are arranged horizontally and vertically so that horizontally adjacent and vertically adjacent concrete blocks have clearances therebetween, and which support corner portions of the concrete blocks (3) thereon, each of the concrete blocks (10) being formed in a cubic or parallelepipedal outer shape so that it has an outwardly opened hollow structure, by using a split core (12) which can be broken down and removed after the concrete has been hardened, thus obtaining a structure of which the interior of the concrete blocks (10) communicate with each other when a plurality of blocks (10) are horizontally and vertically arranged.

## Description

### TECHNICAL FIELD

The present invention relates to a concrete block for constructing various types of structures and a block joint for constructing a block structure as well as to a block structure using them in the fields of civil engineering, construction and the like.

### BACKGROUND ART

In the fields of civil engineering, construction and the like, various shapes and configurations of concrete blocks have been used hitherto in accordance with each purpose of the applications, condition of the sites, and so forth. For example, there have been blocks for a slope which are to be constructed along an inclined surface of the ground, boundary blocks for separating a pavement from a road, blocks for the sideditch of a water channel, retaining wall blocks having reinforcing bar inserting holes formed therein, and the like.

When constructing these concrete blocks at the site, in the case of retaining wall blocks, for example, it is a general practice that the blocks are stacked in layers arranging reinforcing bars through them, and any clearances between the blocks are filled with mortar to form joints. In the case of sideditch blocks and boundary blocks, they are arranged horizontally and joined one another by mortar.

Since each conventional concrete block has a specific shape, configuration and weight corresponding to its application, it is difficult to use them for another application. For example, a sideditch block cannot be used as a retaining wall block. Therefore, the respective concrete blocks have limited uses, and it is impossible to widely use one type of concrete block in different applications. Thus, manufactures have to prepare various manufacturing lines and molds in accordance with each application, which considerably affects the production cost. In addition, it is difficult to manufacture a concrete block formed in a special shape adapted to a special object because complicated mold frames and cores are needed for the manufacturing process.

Meanwhile, when soft ground is filled, foamed mortar, styrene foam, or the like, for example, is used as a core member in order to prevent subsidence of the ground after construction by reducing the weight of the core member. On the other hand, when concrete blocks are used as the core members and, in particular, if these concrete blocks are of solid type, the weight of the blocks becomes large. Accordingly, the total weight loaded on the ground is increased when a large number of blocks are stacked into an aggregation. Thus, there is fear of subsidence of ground even after the filling.

Furthermore, with regard to the construction process using concrete blocks, blocks are usually arranged vertically or horizontally, and then joints are formed by mortar. When the joints are thus formed, the size of the intervals between the blocks should be kept uniform using a scale or a jointer. Since a high degree of skill is required to make orderly arrangement and to obtain sufficient strength, the quality of the finished structure often fluctuates depending upon the skill of the contractors.

As described above, since most of the conventional concrete blocks for civil engineering and construction are restricted in applications and tend to have a large weight, they often fail to be properly applied to some conditions of construction. In addition, when the blocks are arranged, since the position and attitude of the blocks entirely depend upon manual work, a long time is required for construction, and the arrangement of the blocks may be disturbed.

An object of the present invention is to provide a relatively light-weight concrete block which can be manufactured easily and used in various fields of application; a block joint capable of carrying out the arrangement of the concrete blocks simply and retaining the arranged concrete blocks in good order; and a structure made by using the concrete blocks and joints.

### DISCLOSURE OF THE INVENTION

There is disclosed a concrete block of the present invention which comprises a polyhedral body having at least six outer faces and including a hollow portion in the interior thereof, said hollow portion communicating with at least two faces of said outer faces, wherein said hollow portion is formed using a plurality of core segments which can be removed after concrete has been hardened.

With the above structure, provided is a relatively light-weight block which has a hollow portion communicating with at least two faces of the outer faces of the block, thereby securing inlets and outlets for a liquid and gas, and realizing water and gas permeability as well as a high percentage of void. Furthermore, since the hollow portion is molded using a plurality of core segments which can be disassembled and removed after concrete has been hardened, the block can be easily manufactured without a complicated mold and the like. In addition, when a plurality of the concrete blocks are arranged vertically and horizontally, an orderly structured aggregation can be obtained. Thus, the concrete blocks can be used in various fields of application.

In the concrete block of the present invention, the hollow portion is formed using a core composed of cylindrical core segments which are disposed orthogonally to each other in an axial direction, whereby the core segments can be easily removed after concrete has been hardened.

In the hollow portion formed as described above, the cylindrical spaces are formed to be orthogonal to each other. Therefore, when a plurality of blocks are arranged vertically and horizontally, air and water permeability can be secured by making the respective hollow portions communicate with each other. Thus, the applications of the block are further extended. In addition, since any acute-angled portion is not formed on the edges of the openings of the outer faces of the block, the edges of the block are hardly chipped off when hitting against other members. When loaded, the block has high strength because it does not have a portion where distribution of stress changes abruptly, which leads to less concentration of the stress. Thus, the block is excellent also in its durability without occurring fatigue failure.

Further, the hollow portion may be formed using a core composed of angular-prism-shaped core segments which have a cross section defining a polygon of four or more sides and are disposed orthogonally to each other in an axial direction. The angular-prism-shaped core segments can also be easily removed after concrete has been hardened as in the case of using the cylindrical core segments. When a plurality of block bodies are arranged vertically and horizontally, air and water permeability can be secured by making the respective hollow portions communicate with each other, whereby the applications of the block are further extended. Moreover, since the percentage of void of the block body can be increased in comparison with the block body having a hollow portion of a cylindrical shape, the block body is suitable for the applications which require a high percentage of void.

Since the entire form of the block is a cube or a parallelepiped, a plurality of the concrete blocks are arranged vertically and horizontally in good order and with stability, whereby the applications of the concrete blocks can be further extended. Due to the cubic or parallelepiped form, self-standing upright walls and structures can be constructed simply by arranging a plurality of the blocks vertically and horizontally.

Further, according to the concrete block of the present invention, since the hollow portion can be filled with a weight adjusting filler, a structure which requires a larger weight than the block itself can be easily constructed, and the weight of the structure can be readily adjusted by increasing or decreasing an amount of the filler. In this case, crushed stone and the like can be used as the weight adjusting filler.

Next, a block joint of the present invention is the block joint for arranging concrete blocks horizontally and vertically so that clearances are formed between the blocks, wherein the block joint has a six-faced configuration composed of three pairs of confronting faces with at least one pair of the confronting faces being parallel with each other, and all corner portions of the six-faced configuration have seats which restrict positions of blocks so that horizontally and vertically adjacent blocks have clearances therebetween, and which support corner portions of the blocks.

In the above structure, each of the seats may have at least two restricting faces which abut against a vertical face and a top or bottom face of the blocks at each of the corner portions of the blocks, the block joint has a filler hole opened upwardly in a portion other than the seats so that an adhesive filler such as mortar is charged from an upper side of the block joint, and the restricting faces have discharge ports communicating with the filler hole which are opened on an upper portion of the restricting face of each of the seats which abut against the vertical face of the block at each of the corner portions thereof so that the filler can be charged between the block and seats through the discharge ports.

In addition, three through holes each passing between the two confronting faces of the six-faced configuration may be disposed so as to intersect each other and opened at positions which are substantially centers of faces of the six-faced configuration and which do not interfere with the seats.

The block structure of the present invention uses the above-described block joint, and the concrete block has a hollow portion formed in the interior thereof and openings which are open on a periphery of the concrete block and which communicate with the hollow portion, a plurality of the blocks are constructed by placing the corner portions thereof on the seats with clearances formed between the blocks both in horizontal and vertical directions, and the hollow portions of the blocks communicate with each other through the clearances between the blocks and the openings on the blocks.

Further, when a block joint provided with a filler hole and discharge ports for mortar or the like is used, a block structure can be arranged such that blocks are jointed to each other by an adhesive filler such as mortar or the like which is charged from the filler hole and the discharge ports.

Further, when a block joint provided with three through holes is used, a block structure can be arranged such that the respective block joints are restricted in a linked state by reinforcing members such as wires or the like which pass with tension through the through holes.

Furthermore, it is also possible that a bottom and a periphery of the above respective constructed block structure are closed by a closing member.

### BRIEF DESCRIPTION OF THE DRAWINGS

FIG. 1 is a perspective view showing a first embodiment of a block of the present invention.
FIG. 2 is a perspective view showing a split core for manufacturing the block of FIG. 1 in an assembled state.
FIG. 3 is a plan view showing the split core of FIG. 2 in a disassembled state.
FIG. 4 is a view explaining a manufacturing process of the block shown in FIG. 1.
FIG. 5 is a perspective view showing a second embodiment of a block of the present invention.
FIG. 6 is a perspective view showing a third embodiment of a block of the present invention.
FIG. 7 is a perspective view showing a fourth embodiment of a block of the present invention.
FIG. 8 is a plan view showing the block of FIG. 7 in use.
FIG. 9 is a sectional view taken along the line A - A of FIG. 8.
FIGs. 10(a) and (b) are perspective views showing a fifth embodiment of a block of the present invention.
FIG. 11 is a view explaining a manufacturing method of the block shown in FIG. 10.
FIG. 12 is a perspective view showing a first embodiment of a block joint of the present invention.
FIG. 13 (a) is a front elevational view of the block joint of FIG. 12, and FIG. 13 (b) is a plan view of the block joint of FIG. 12.
FIG. 14 is a perspective view showing a second embodiment of a block joint of the present invention.
FIG. 15 (a) is a front elevational view of the block joint of FIG. 14, and FIG. 15(b) is a plan view of the block joint of FIG. 14.
FIG. 16 is a perspective view of a main portion showing blocks jointed by the block joint of FIG. 12.
FIG. 17 is a developed perspective view showing how to joint blocks using the block joint shown in FIG. 14.
FIG. 18 is a perspective view showing that four blocks are disposed and jointed one another.
FIG. 19 is a schematic sectional view of an example of blocks used as a block structure.
FIG. 20 is a schematic sectional view of a block structure used as an underground water tank.
FIG. 21 is a schematic sectional view of another example of the block structure used as the underground water tank.

### BEST MODE OF CARRYING OUT THE INVENTION

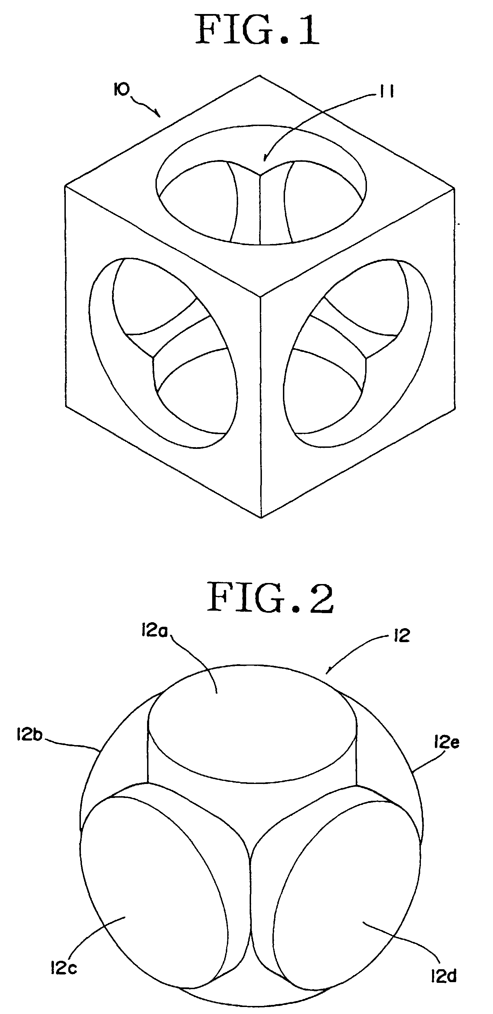

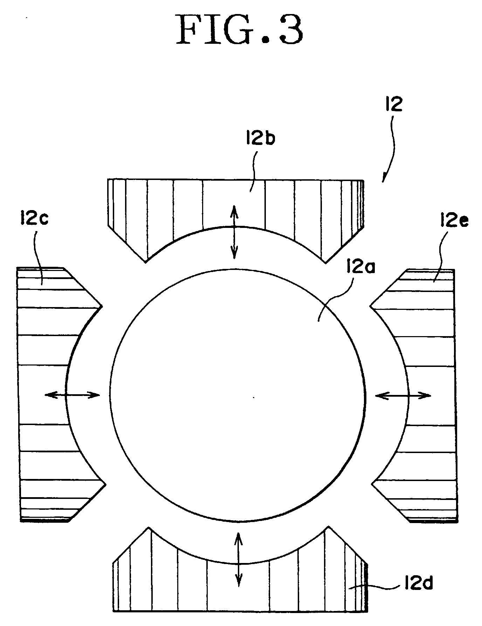

First, embodiments of a concrete block of the present invention will be described. FIG. 1 is a perspective view showing a block of a first embodiment; FIG. 2 is a perspective view showing a split core for manufacturing the block of FIG. 1 in an assembled state; and FIG. 3 is a plan view showing the split core of FIG. 2 in a disassembled state.

A block 10 of the embodiment is of a cubic outer shape and has a hollow portion 11 communicating with each of the six faces which constitute a cube. Further, the hollow portion 11 is formed by a split core 12 which can be disassembled and removed after concrete has been hardened as described below.

With the above arrangement, when a plurality of the blocks 10 are arranged vertically and horizontally, a structure can be constructed in good order with high stability. Thus, the applications of the block 10 are extended, and the block 10 can be used in various fields. In addition, since the hollow portion 11 communicates with all of the six faces of the cube, the percentage of void of the block 10 is increased, and the block 10 has a relatively light weight.

The hollow portion 11 of the block 10 is molded using the split core 12 which is composed of a main core segment 12a and auxiliary core segments 12b, 12c, 12d, 12e and can be disassembled and removed after the concrete has been hardened. Therefore, the block 10 does not require any complicated mold and can be easily manufactured.

In the block 10, the hollow portion 11 is molded using the split core 12 in which the cylindrical main core segment 12a and the auxiliary core segments 12b, 12c, 12d, 12e are disposed orthogonally to each other in an axial direction. Accordingly, the split core 12 can be easily removed after the concrete has been hardened as described below.

In this case, cylindrical spaces are formed orthogonally to each other in the hollow portion 11. Thus, when structures are constructed by arranging the blocks 10 in a horizontal or a vertical direction, the respective hollow portions 11 can easily communicate with each other, whereby air and water permeability can be secured in the various kinds of structures so that the applications of the block 10 can be extended.

Further, in the block 10 of the embodiment, the hollow portion 11 is arranged such that the cylindrical spaces are formed orthogonal to each other and the edges of the openings of the outer faces of the block have no acute-angled portion. Accordingly, when hitting against other member, the side edge of the block 10 is hardly chipped off. In addition, when loaded, the block 10 has high strength because it does not have a portion where the distribution of stress changes abruptly, which leads to less concentration of stress, whereby the block 10 is excellent in durability without causing fatigue failure.

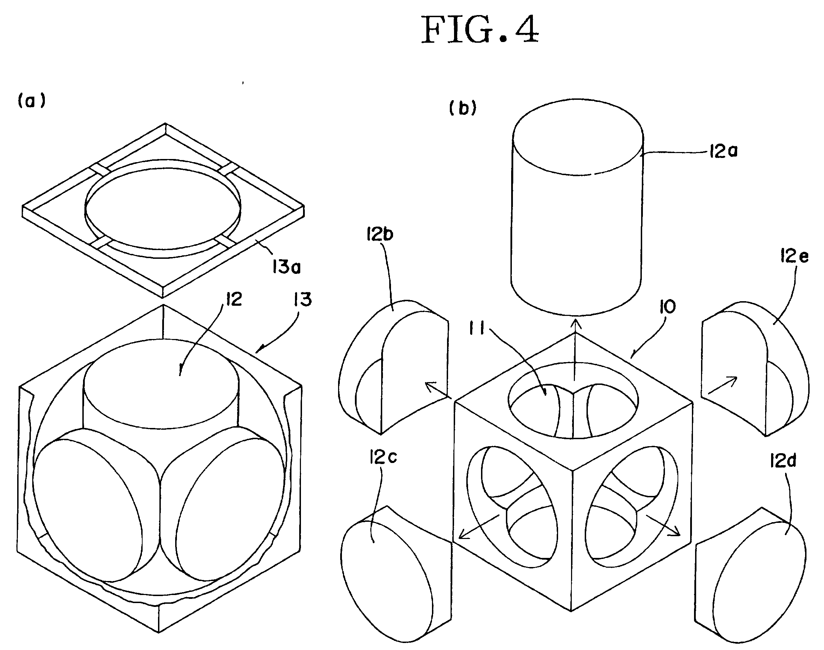

A manufacturing method of the block 10 will be described with reference to FIG. 4. FIG. 4 is a view explaining a manufacturing process of the block 10.

As shown in FIG. 4 (a), the split core 12 assembled to a predetermined shape is disposed in a schematically cubic mold 13, and an upper frame 13a is mounted on the mold 13. Then, concrete is charged between the mold 13 and the split core 12 from the opening of the upper frame 13a. When the concrete has been hardened after a prescribed period, the upper frame 13a and the mold 13 are removed. Next, the auxiliary core segments 12b, 12c, 12d, 12e which constitute the split core 12 are drawn out in the axial directions, respectively, and thereafter the main core segment 12a is drawn out in the axial direction. By these processes, the block 10 having the hollow portion 11 can be obtained.

In this case, since the main core segment 12a and the auxiliary core segments 12b, 12c, 12d, 12e of the cylindrical split core are disposed orthogonally to each other in the axial directions, the split core 12 can be easily removed after the concrete has been hardened. As described above, the block 10 having the hollow portion 11 can be easily manufactured without any complicated mold.

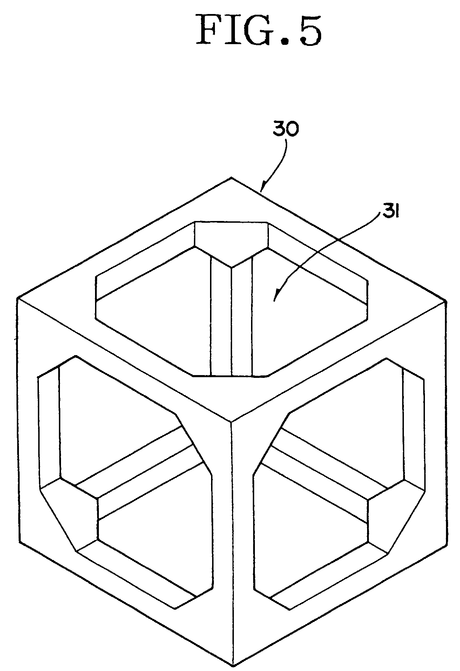

FIG. 5 is a perspective view showing a block of a second embodiment. A hollow portion 31 of a block 30 of this embodiment is molded using a split core composed of an octagonal-prism-shaped main core segment and auxiliary core segments which are disposed orthogonally to each other in the axial directions. With this arrangement, the block 30 has a higher percentage of void than that of the block 10 of the first embodiment.

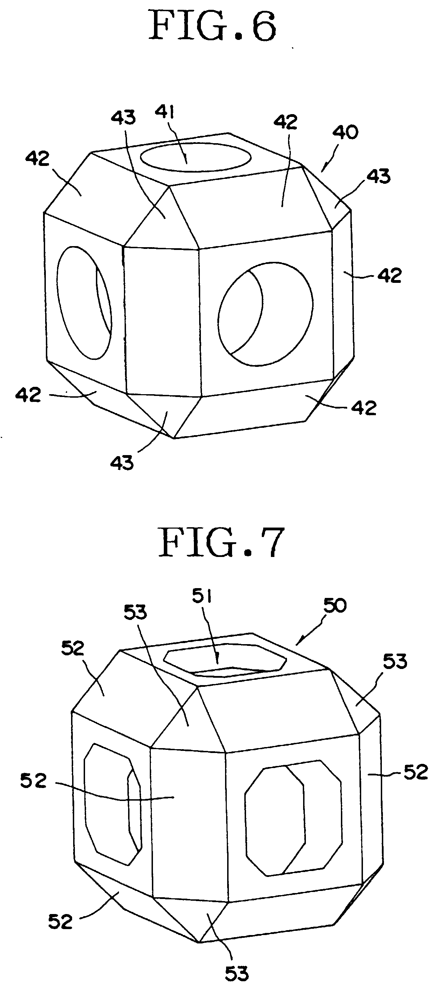

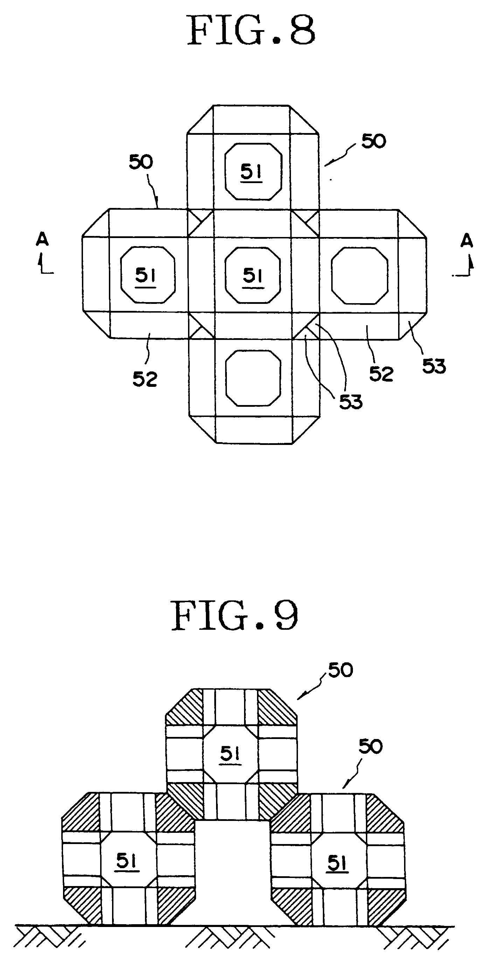

FIG. 6 is a perspective view showing a block of a third embodiment; FIG. 7 is a perspective view showing a block of a fourth embodiment; FIG. 8 is a plan view showing the block of FIG. 7 in use; and FIG. 9 is a sectional view taken along the line A - A of FIG. 8.

The outer shape of blocks 40 and 50 is formed in a polyhedral shape having slants 42, 43, 52, 53 by chamfering the portions corresponding to the corners and edges of the cubes. Therefore, as shown in FIGS. 8 and 9 which show the block 50 as an example, the blocks 40, 50 can be stacked in good order by joining the slants 52 and 53 with each other. In this case, since the slants 52, 53 of adjacent blocks 50 are joined to restrict the positions to each other, excellent stability can be obtained.

Since a clearance is formed between the blocks 50 adjacent to each other in a horizontal or a vertical direction, a structure constructed by a plurality of blocks 50 can have an increased percentage of void as a whole. The block 40 has the same function as that of the block 50 and can obtain the same effect.

The blocks 40, 50 have hollow portions 41, 51 which communicate with all of the six faces of the blocks, and the hollow portions 41, 51 are formed using a plurality of core segments which can be removed after concrete has been hardened as in the block 10 of the first embodiment. While the outer shape of the block 40 is the same as that of the block 50, the block 40 is suitable for applications which require high strength because the hollow portion 41 is formed such that the cylindrical spaces are arranged orthogonal to each other, whereas the block 50 is suitable for applications which require a high percentage of void because the hollow portion 51 is formed such that the octagonal-prism-shaped spaces are arranged orthogonal to each other.

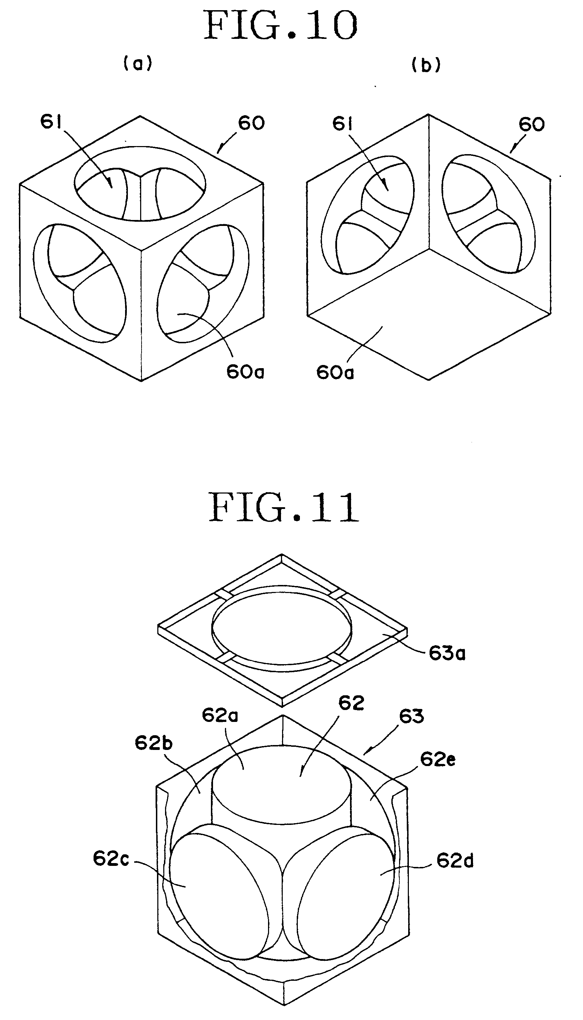

FIGs. 10(a) and (b) are perspective views showing a block of a fifth embodiment, wherein (a) is a perspective view from a top face side and (b) is a perspective view from a bottom face side. FIG. 11 is a view explaining a manufacturing method of a block.

As shown in FIG. 10, a block 60 of the embodiment is a cubic outer shape and has a hollow portion 61 which communicates with the five faces among the six faces constituting the cube. Further, as shown in FIG. 11, the hollow portion 61 is formed using a split core 62 which can be disassembled and removed after concrete has been hardened.

With the above arrangement, the hollow portion 61 communicates with the five faces except a bottom face 60a. Thus, a plurality of the blocks 60 can be arranged horizontally so that the respective hollow portions 61 are coupled with each other, which secures water and air permeability. Accordingly, a water channel which is successive in a lateral direction, for example, can be easily constructed.

When the hollow portion 61 is filled with a weight adjusting filler, the filler can be held by the bottom face 60a, thereby improving efficiency in construction. In this case, since the bottom face 60a is made to have a recess in the hollow portion 61, the block 60 has an excellent function of holding a filler and the like, and the weight of the block 60 can be easily adjusted by increasing or decreasing an amount of the filler.

The hollow portion 61 can be made using a split core 62 composed of a main core segment 62a and auxiliary core segments 62b, 62c, 62d, 62e which can be disassembled and removed after concrete has been hardened as in the block 10 of the first embodiment. However, the main core segment 62a constituting the split core 62 is different from the main core segment 12a of the split core 12 of FIG. 2 in that the axial length of the main core segment 62a is shorter than the length of one edge of the block 60, and that the lower end of the main core segment 62a is formed in a convex shape to form the bottom face 60a having a recess in the hollow portion 61. In the figures, numeral 63 denotes a mold, and numeral 63a denotes an upper frame.

As described above, in the concrete block of the present invention, the hollow portion can be formed using a plurality of core segments which can be removed after concrete has been hardened. Thus, a light-weight concrete block can be easily made. In particular, when using the core composed of the cylindrical core segments which are disposed orthogonally to each other in the axial directions, the core can be easily removed after concrete has been hardened. Since the hollow portion is formed such that the cylindrical spaces are arranged orthogonal to each other, when a plurality of concrete block bodies are arranged vertically and horizontally, a structure can have hollow portions which communicate with each other. Thus, air and water permeability can be secured, and the applications of the concrete block can be extended. Further, since the hollow portion is formed such that the cylindrical spaces are arranged orthogonal to each other, no acute-angled edge is formed to the openings, thereby preventing the edges from chipping off. Further, since concentration of stress is hardly to be generated, compressive strength is increased, and fatigue failure is reduced. Accordingly, durability of the block can be improved.

When the hollow space is formed using a core composed of angular-prism-shaped core segments which have a cross section defining a polygon of four or more sides and are disposed orthogonally to each other in the axial directions, the percentage of void of the block can be increased compared to that of the block using cylindrical core segments.

Further, when a block is made of a cube or a parallelepiped, a stable block structure can be constructed simply by arranging a plurality of the blocks vertically and horizontally.

Furthermore, when a hollow portion of the block is filled with a weight adjusting filler, a structure with a larger weight than the block itself can be easily constructed, and the weight of the structure can be easily adjusted by increasing or decreasing an amount of the filler.

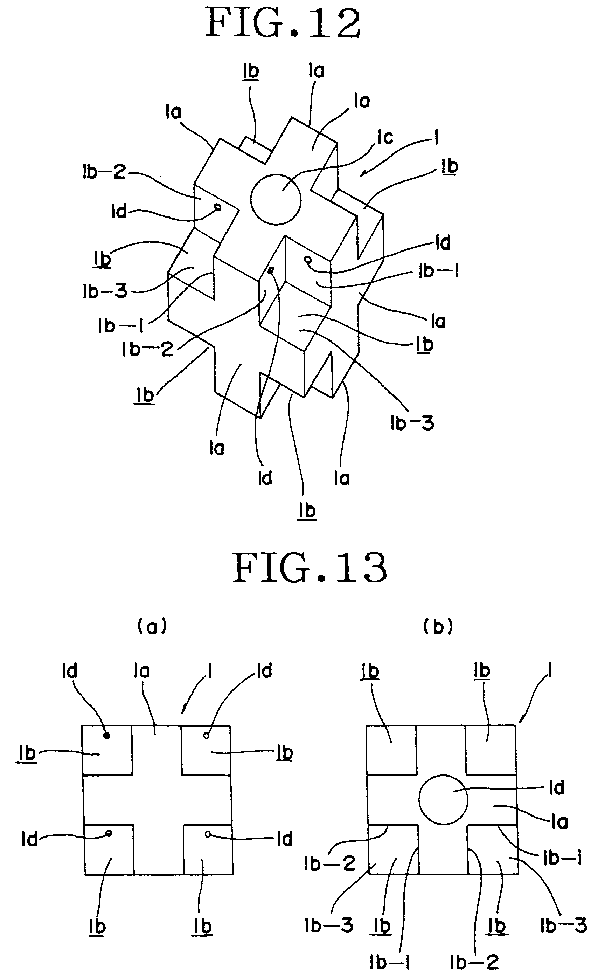

Next, embodiments of a block joint of the present invention will be described. FIG. 12 is a perspective view showing a block joint of a fist embodiment, and FIGs. 13 (a) and (b) are a front elevational view and a plan view, respectively, of the block joint of FIG. 12.

In the figures, a block joint 1 is made of concrete using a mold. The basic figure of the block joint 1 is made by cutting four portions having a square cross section in a lateral and longitudinal directions from a regular hexahedron on the upper and lower sides thereof. That is, as shown in, for example, the front elevational view of FIG. 13 (a), a cross face 1a having a cross-shape is formed on a square outer shape so that the cross face 1a has a width equivalent to one third of the length of one side of the square. The cross face 1a is formed on each of the six faces of a joint. With this arrangement, the block joint 1 is provided with a seat 1b as a cubic cutout which is formed to each of the four portions on the right and left sides of the joint 1 at the upper and lower positions thereof, as well as the cross face 1a.

The seat 1b includes three restricting faces 1b-1, 1b-2 and 1b-3 which are orthogonal to each of the cross faces 1a, thereby constituting the outer form of the seat. As shown in FIGs. 13 (a) and (b), the longitudinal and lateral lengths of these restricting faces 1b-1, 1b-2 and 1b-3 are equal to the width of the cross face 1a in the direction of the arrangement of the restriction faces on the both sides of the cross face 1a.

As shown in FIG. 12, a filler hole 1c having a circular cross section is opened downward on the cross face 1a disposed on a top face so that mortar, a fluid adhesive or the like can be charged therethrough. Passages communicating with the filler hole 1c are formed in the block joint 1, and the ends of the passages are connected to the longitudinal restricting faces 1b-1 and 1b-2 of the seat 1b, respectively, to form discharge ports 1d. As shown in FIG. 12, these discharge ports 1d are arranged at the centers in the width direction of the respective restricting faces 1b-1, 1b-2 and in positions closer to the upper sides thereof.

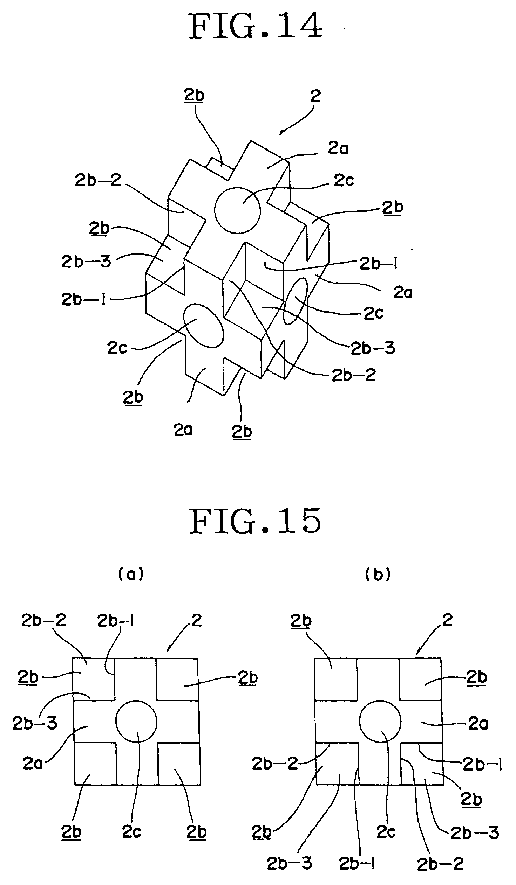

FIG. 14 is a perspective view showing a block joint of a second embodiment, and FIG. 15 (a) and (b) are a front elevational view and a plan view of the block joint of FIG. 14, respectively.

The basic configuration of the joint 2 is the same as the block joint 1 shown in FIGs. 12 and 13. As the block joint 1, the joint 2 is basically formed as a regular hexahedron and has cross faces 2a, seats 2b and restricting faces 2b-1, 2b-2, 2b-3. That is, the joint 2 shown in the figure is not provided with a filler hole and discharge ports because the joint 2 is connected to a block via an adhesive which is applied to the block in advance. In this embodiment, a through hole 2c having a circular cross section is formed at the center of each cross face 2a in order to reduce the total weight of the joint 2 as well as to pass wires or the like therethrough as described below. The through holes 2c are opened in all of the six cross faces 2a and have an inside diameter defined so as not to affect the mechanical strength of the joint 2.

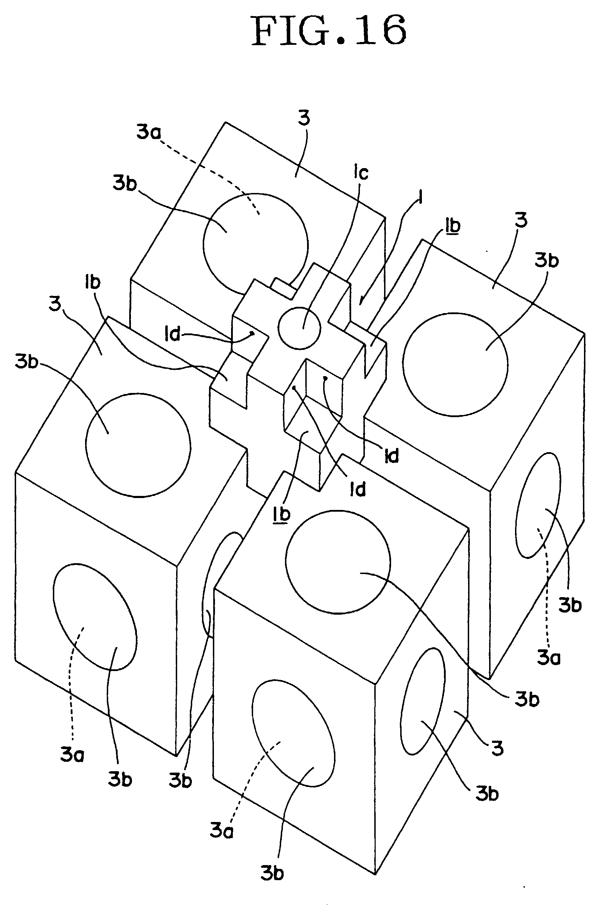

Next, an embodiment of a block structure of the present invention will be described. FIG. 16 is a perspective view of a main portion showing blocks jointed one another by the block joint 1 shown in FIG. 12.

A block 3 in the embodiment has a cubic outer shape and includes a hollow portion 3a which communicates with each of the six faces constituting the cube, and circular openings 3b are formed on the faces of the block 3, respectively.

As shown in the figure, the four blocks 3 are jointed integrally with each other in such a manner that the joint 1 is fitted into the butting portions of the respective corner portions of the four blocks 3. Specifically, the four seats 1b formed on the lower half side of the joint 1 are tightly fitted on the upper ends of the corner portions of the blocks 3, and the faces of the respective block 3 tightly contact the restricting faces 1b-1 to 1b-3. With this arrangement, the respective blocks 3 are arranged such that clearances having a width corresponding to the width of the cross face 1a are kept between the blocks 3 in the form of orthogonal lattice. Then, when mortar is supplied from the filler hole 1c above, the mortal flows out from the discharge ports 1d which communicate with the filler hole 1c. As shown in FIG. 13 (a), since the discharge ports 1d are provided on the upper sides of the restricting faces 1b-1 and 1b-2 which are formed upright, the mortar spreads downward along the restricting faces 1b-1 and 1b-2 so as to cover the area jointed to side walls of the respective blocks 3.

The blocks 3 vertically arranged in two layers can be constructed by placing another set of four blocks 3 on the integrally arranged blocks as described above by means of the seats 1b facing upward. Also in the upper layer of the blocks 3, mortar is charged from the filler hole 1c not only to the upright restricting faces 1b-1 and 1b-2 but also to the level restricting face 1b-3 through the discharge ports 1d. Thus, the blocks 3 are jointed one another through the mortar on the entire seats 1b.

The structure of the blocks 3 each having the hollow portion 3a as a hollow structure can be constructed by arranging a multiplicity of the blocks 3 on the same plane as well as stacking them vertically by the method described above. The structure can be used as a core member and the like of a filling of ground, for example.

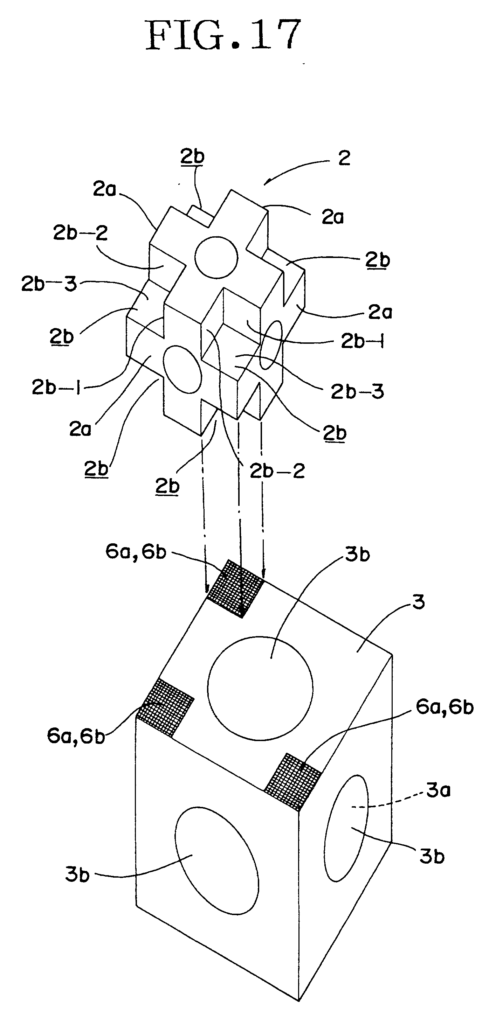

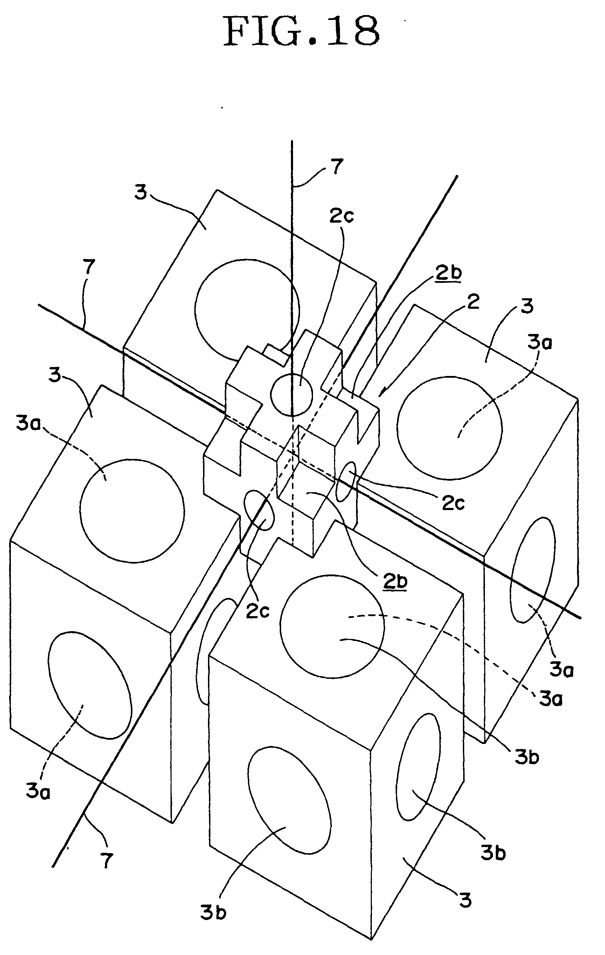

FIG. 17 is a developed perspective view showing how the blocks 3 are jointed one another using the block joint 2 shown in FIG. 14, and FIG. 18 is a perspective view showing four blocks 3 disposed and jointed one another.

Since no filler hole and discharge port for supplying mortar are formed in the joint 2, an adhesive 6a such as a resin paste or the like is coated on the corner portions on the upper face of the block 3 in order to attach the joint 2 to the block 3, and meshes 6b are disposed on the coated portions for adjusting the levels of the coated portions as shown in FIG. 17. The joint 2 is disposed such that the seats 2b are fitted on the corner portions of the block 3 with the adhesive 6a and the meshes 6b as in the case of the joint 1. Thus, the four blocks 3 can be jointed one another as shown in FIG. 18.

In FIG. 18, the blocks 3 are disposed as in the above-described embodiment. When a multiplicity of the blocks 3 are arranged horizontally as well as stacked vertically in layers, a structure having a required volume can be constructed by the blocks 3. Then, wires 7 as tension members are stretched so as to pass through the joints 2 in order to increase the strength of the structure of the blocks 3 and to prevent the collapse or the like. Specifically, the joint 2 has the three pairs of the cross faces 2a facing to each other, and the through holes 2c passing through each pairs of the cross faces 2a are opened orthogonally to each other. Therefore, the joints 2 can be linked with each other by passing the wires 7 through the through holes 2c. Accordingly, the blocks 3 are not only restricted at spots by the joint 2 but also subjected to the restricting force of the overall structure by the wires 7. Thus, a more stable structure is obtained.

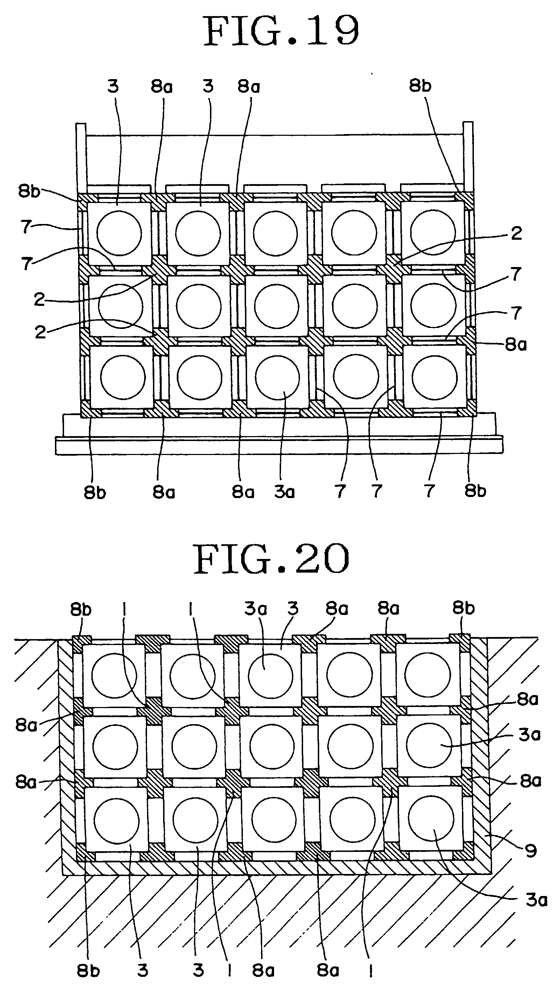

FIG. 19 is a schematic sectional view of an example in which blocks 3 are stacked so that they can be used as, for example, a core member for a filling of ground or other structures. While either of the joint 1 of FIG. 12 or the joint 2 of FIG. 14 may be used as a joint, the joint 2 of FIG. 14 is shown in this illustrated embodiment.

In the structure composed of the blocks 3, spacers 8a having a T-shaped cross section and spacers 8b having an L-shaped cross section, which are provided with seats to restrict the corner portions of the blocks 3 as in the joints 2, are disposed on both the upper and the lower ends of the blocks 3 as well as on the peripheries thereof, thereby preventing the collapse in the clearances between the blocks 3 formed by the joints 2.

In the structure composed of the blocks 3 disposed as described above, the percentage of void of the structure can be increased by the hollow portions 3a of the blocks 3 and the clearances between the blocks 3, which reduces the weight of the structure per unit area where blocks are constructed. Therefore, the structure can be used as a core member for a filling on soft ground. In addition, when the structure is sunk in a reservoir or a stormwater detention pond, it can be used as reclaiming material while maintaining a water storage effect achieved by the spaces of the hollow portions 3a. Further, as shown in the embodiment of FIG. 20, when a cover member is provided to cover the bottom and front faces of the outer periphery of the structure, the structure can be used as a water tank installed on ground.

FIG. 20 is a schematic sectional view of a structure which can be used as an underground water tank. In the embodiment, the joint 2 shown in FIG. 12 is used, and the spacers 8a and 8b are used as well. The overall structure is buried in ground, and the periphery thereof is entirely surrounded by a concrete wall 9 and sealed. An adequate cover or an opening/closing-type lid may be provided on the portion which faces the surface of the ground.

Each of the blocks 3 is arranged to have a hollow structure including the hollow portion 3a formed therein, and the hollow portions 3a of all of the blocks 3 communicate with each other through the circular openings 3b formed on the peripheries of the block 3. Further, clearances are formed around each of the blocks 3 by the joints 1 as well as the spacers 8a, 8b. Therefore, the whole structure surrounded by the concrete wall 9 is formed as a tank including the blocks 3 therein and can be used as a water storage layer. Since the blocks 3 are arranged in a grid-shape in the concrete wall 9, the blocks 3 function as reinforcing members, which achieves perfect countermeasures against an earthquake and the like. In place of an underground water tank, the illustrated structure should also be used as a water tank installed on ground, a roof of a building and the like.

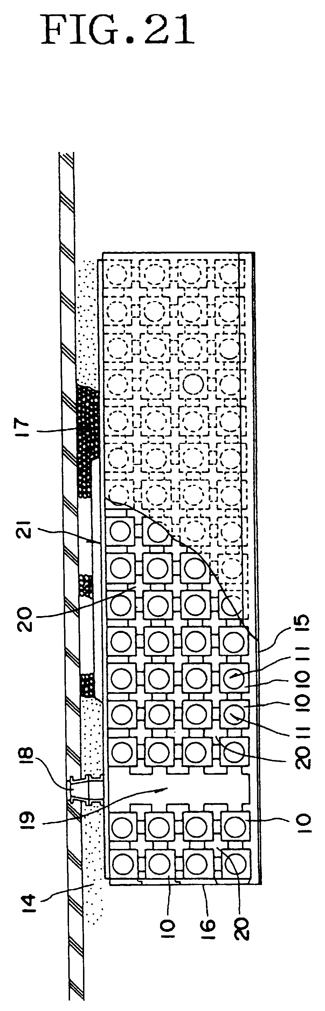

FIG. 21 is a schematic sectional view of another example of the structure which can be used as an underground water tank. Referring to this example, in a space formed by excavating a ground 14 and disposing a foundation plate 15 and side walls 16, the blocks 10 shown in FIG. 1 are arranged horizontally in longitudinal and lateral directions and also arranged vertically through joints 20 which are the same as the joints 1 or the joints 2. A water collecting section 17 having water permeability is disposed on a structure 21 comprising the blocks 10. Further, a space 19 where no block is disposed is formed in a part of the structure 21 of the blocks 10, and a manhole 18 is disposed above the space 19.

When the structure 21 is constructed in the ground 14, since rainwater on the ground surface passes through the water collecting section 17 and collects into the structure 21, the water on the ground surface drains smoothly. In addition, rainwater and the like collected in the structure 21 can be pumped up through a suction pipe or the like inserted from the manhole 18 into the space 19. Therefore, this structure can be applied to various purposes.

In this case, each of the blocks 10 formed in a cube is self-standing and can be constructed easily. The blocks can be arranged horizontally and vertically in an orderly state and are excellent in stability. Since the block 10 has the hollow portion 11 communicating with all of the six faces of the block, the block 10 has a large capacity for water storage, is relatively light-weight, and is excellent in a construction efficiency with no fear of subsidence. Further, since the block 10 is formed in a cube, the state of the structure can be constant even if the blocks are arranged with different faces upward. As a result, the blocks can be arranged horizontally and vertically to form a structure adapted to the space where the blocks are installed in the site.

As described above, in the block joint of the present invention, since blocks can be arranged horizontally and vetcially with the clearances defined therebetween in the state that the blocks rest on the seats formed to the joints, the joints function as positioning members for the respective blocks. Therefore, in comparison with the construction using the conventional joints, the construction process can be simplified. In addition, after construction, the blocks keep an orderly state, and a stable structure can be obtained.

In the block joint provided with the filler hole and the discharge port for supplying the filler such as mortar or the like, since the mortar or the like can be supplied onto the surfaces of the seats of the joint, it is unnecessary to apply an adhesive or the like in advance to either the joints or the blocks, which enhances the efficiency of construction.

In the block joints provided with the three through holes, since the joints can be linked to each other by the tension members such as wires or the like passing through the through holes, the disturbance of the arranged multiplicity of the blocks and the collapse of the stacked layers of the blocks can be prevented by the application of the restricting force of bundling the whole structure of the blocks through the joints.

In the block structure of the present invention, since the block itself has a hollow structure and further a clearance can be formed between the blocks by the joints, the percentage of void of the whole block structure can be increased. Accordingly, the weight of the block structure can be reduced, and the application of the block structure to soft ground and the like can be optimized.

Further, in the block structure arranged such that the bottom and periphery of the structure are sealed by a closing member, since the hollow portions communicate with each other between the blocks, the block structure can be used as a water tank and the like for storing water in the interior of the block structure which is closed by the closing member. Therefore, the block structure can be used not only as a core member and the like for construction such as a filling but also can be applied to a water storage tank and the like, and thus the versatility of the block structure can be enhanced.

### Industrial Applicability

The structure composed of the concrete blocks with the block joints of the present invention can be used as a core member for a light-weight filling and the like. Further, the present invention can be utilized in the field of a water storage tank which is installed underground, for example, using the structure of the blocks communicating with each other.

## Claims

1. A concrete block comprising a polyhedral body having at least six outer faces and including a hollow portion in the interior thereof, said hollow portion communicating with at least two faces of said outer faces, wherein said hollow portion is formed using a plurality of core segments which can be removed after concrete has been hardened.

2. A concrete block according to claim 1, wherein said hollow portion is formed using a core composed of cylindrical core segments which are disposed orthogonally to each other in an axial direction.

3. A concrete block according to claim 1, wherein said hollow portion is formed using a core composed of angular-prism-shaped core segments which have a cross section defining a polygon of at least four sides and are disposed orthogonally to each other in an axial direction.

4. A concrete block according to claim 1, 2 or 3, wherein said polyhedral body is a cube or a parallelepiped.

5. A concrete block according to claim 1, 2, 3 or 4, wherein said hollow portion can be filled with a weight adjusting filler.

6. A block joint for arranging concrete blocks horizontally and vertically so that clearances are formed between the blocks, wherein said block joint has a six-faced configuration composed of three pairs of confronting faces with at least one pair of the confronting faces being parallel to each other, and all corner portions of said six-faced configuration have seats which restrict positions of blocks so that horizontally and vertically adjacent blocks have clearances therebetween, and which support the corner portions of said blocks.

7. A block joint according to claim 6, wherein each of said seats has at least two restricting faces which abut against a vertical face and a top or bottom face of said blocks at each of the corner portions of the blocks, said block joint has a filler hole opened upwardly in a portion other than the seats so that an adhesive filler such as mortar is charged from an upper side of said block joint, and said restricting faces have discharge ports communicating with said filler hole which are opened on an upper portion of the restricting face of each of the seats which abut against the vertical face of the block at each of the corner portions thereof so that the filler can be charged between the block and the seats through said discharge ports.

8. A block joint according to claim 6, wherein three through holes each passing between said two confronting faces of the six-faced configuration are disposed so as to intersect each other and opened at positions which are substantially centers of faces of said six-faced configuration and which do not interfere with said seats.

9. A block structure constructed using the block joint according to claim 6, wherein said concrete block has a hollow portion formed in the interior thereof and openings which are open on a periphery of the concrete block and which communicate with the hollow portion, a plurality of said blocks are constructed by placing the corner portions thereof on said seats with clearances formed between the blocks both in horizontal and vertical directions, and said hollow portions of the blocks communicate with each other through said clearances between the blocks and said openings on the blocks.

10. A block structure constructed using the block joint according to claim 7, wherein said concrete block has a hollow portion formed in the interior thereof and openings which are open on a periphery of the concrete block and which communicate with the hollow portion, and said blocks are constructed with clearances formed between the blocks both in horizontal and vertical directions by placing the corner portions thereof on said seats and jointing said corner portions to the seats by said adhesive filler such as mortar or the like which is charged from the filler hole and the discharge ports, thereby said hollow portions of the blocks communicating with each other through said clearances between the blocks and said openings of the blocks.

11. A block structure constructed using the block joint according to claim 8, wherein said concrete block has a hollow portion formed in the interior thereof and openings which are open on a periphery of the concrete block and which communicate with the hollow portion, said blocks are constructed with clearances formed between the blocks both in horizontal and vertical directions by placing the corner portions thereof on said seats and jointing said corner portions to the seats by an adhesive filler, and a plurality of said block joints are restricted in a linked state by reinforcing members such as wires or the like which pass with tension through said through holes opened on the block joints, thereby said hollow portions of the respective blocks communicating with each other through said clearances between the blocks and said openings of the blocks.

12. A block structure according to claim 9, 10 or 11, wherein a bottom and a periphery of the constructed block structure are closed by a closing member.
